Europäisches Patentamt

(19) European Patent Office (11) Publication number: **0 100 316**

Office européen des brevets **B1**

(12) **EUROPEAN PATENT SPECIFICATION**

(45) Date of publication of patent specification: **30.12.86** (51) Int. Cl.⁴: **F 16 P 3/08, E 05 C 3/04**

(21) Application number: **82902687.1**

(22) Date of filing: **10.09.82**

(86) International application number:
**PCT/GB82/00269**

(87) International publication number:
**WO 83/00910 17.03.83 Gazette 83/07**

(54) **FASTENING AND CONTROL OPERATING DEVICE.**

(30) Priority: **10.09.81 GB 8127318**
**03.10.81 GB 8129910**

(43) Date of publication of application:
**15.02.84 Bulletin 84/07**

(45) Publication of the grant of the patent:
**30.12.86 Bulletin 86/52**

(84) Designated Contracting States:
**AT BE CH DE FR GB LI LU NL SE**

(56) References cited:
**CH-A- 443 050**
**DE-A-2 808 752**
**FR-A-2 309 696**
**GB-A-1 260 322**
**GB-A-1 475 070**
**GB-A-1 513 823**
**GB-A-2 042 048**
**GB-A-2 058 198**
**US-A-3 207 541**

(73) Proprietor: **SMITH, Donald Bebbington**
**68 Numa Court Justin Close Brentford**
**Middlesex TW8 8QF (GB)**

(72) Inventor: **SMITH, Donald Bebbington**
**68 Numa Court Justin Close Brentford**
**Middlesex TW8 8QF (GB)**

(74) Representative: **Orchard, Oliver John**
**JOHN ORCHARD & CO. Staple Inn Buildings**
**North High Holborn**
**London WC1V 7PZ (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

This invention relates to a fastening and control operating device. Such a device in accordance with the prior art portion of claim 1 is known from GB—A—1.206.322 wherein a safety device for guarded machinery is proposed having a cylindrical key 9 with a portion 10 forming a key bit from which stout external lugs 11 project to enable a securing function to be provided.

In this previously proposed device it is not possible to have any independent movement of the key function and the lugs which provide the securing function.

The present invention as claimed in claim 1 is intended to remedy this drawback.

A feature of one embodiment of the present invention is that separate elements are employed to carry out the securing or fastening function and the control function, whereby the two functions may be effected independently and the elements employed to carry out one of the functions may be locked, while the elements employed to carry out the other function may be free for operation.

Particular embodiments of the invention are set out in the dependent claims.

Embodiments of the invention will now be described, by way of example, with reference to the accompanying drawings, in which:—

Fig. 1 is an exploded perspective view of one embodiment of a fastening and control operating device,

Fig. 2 is a longitudinal sectional view of another embodiment,

Figs. 3 and 4 show plan views of elements employed in the arrangement shown in Fig. 2,

Fig. 5 is a sectional view on the line A—A of Fig. 2,

Fig. 6 is a sectional view, corresponding to Fig. 5, of a modification of the arrangement shown in Fig. 2 and

Fig. 7 is a diagrammatic illustration of control and locking arrangements which may be used with the embodiment shown in Fig. 2.

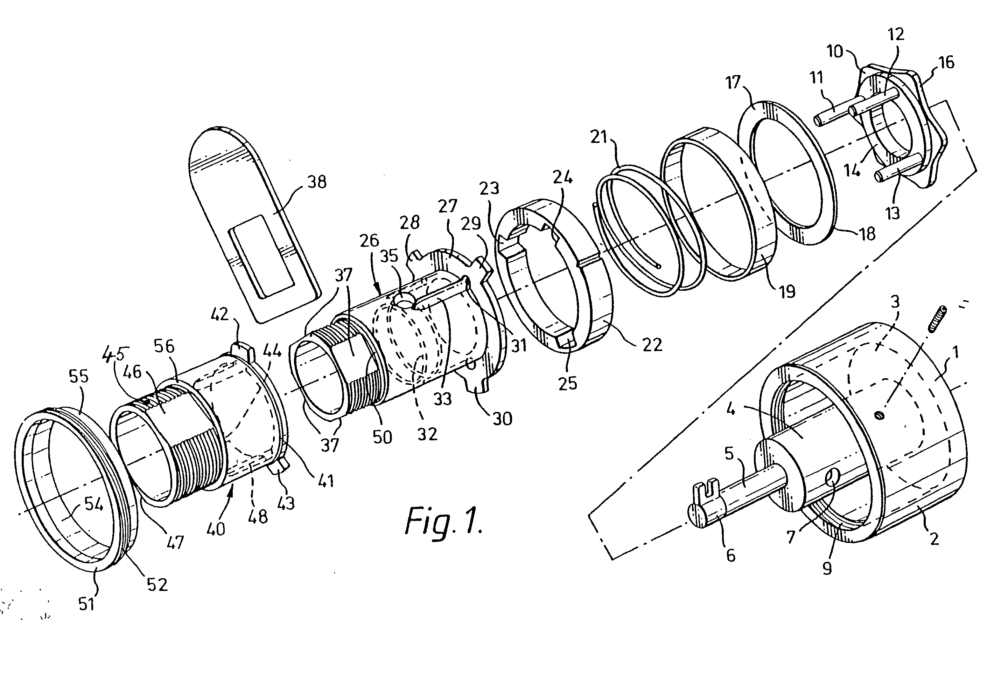

Referring to Figure 1, there is shown an exploded perspective view of the main parts of an assembly. The assembly includes a cylindrical handle 1 having a wall portion 2 and a base portion 3. From the base portion 3, there extends a central inner tubular shaft portion 4. A rod 5 carrying a key 6 extends inwardly and axially from the closed end of the tubular portion 4. Access to the inside of the tubular shaft portion 4 is obtained through a central hole (not visible) in the centre of the outer face of the base portion 3. Diametrically opposite holes 7, one of which is visible in the Figure, are provided in the wall of the tubular shaft portion 4. A part of the inside of the wall portion 2 is threaded at 9.

In assembling the parts, a washer 10 is passed over the shaft 4 in such a way that it rests against the inner face of the base portion 3 of the handle 1, with three rods 11, 12 and 13 extending from a raised inner portion 14 of the washer 10 in a direction away from the base portion 3. The outer portion 15 of the washer 10 has a scallop-shaped edge 16. An intermediate washer 17, whose outer edge 18 extends radially beyond the maximum radius of the edge 16 of the washer 10, is next placed against the outer portion 15 of the washer 10, and a spacer collar 19 is then positioned against the face of the intermediate washer 17.

A spiral spring 21 is then placed on the intermediate washer 17 in such a way that it extends within a ring 22, in whose inner surface there are three slots 23, 24 and 25. The ring 22 is fitted snugly within the wall 2 of the handle 1 and the ring 22 is held in position, by means not shown, in such a way that it is below the edge of the wall 2 remote from the base 3.

It should be noted that the rods 11, 12 and 13 are arranged on the portion 14 of the washer 10 at angular intervals which are not equal and extend to a level just below that of the face of the ring 22 remote from the base 3.

The slots 23, 24 and 25 in the ring 22 are also arranged at angular intervals that are not equal. The angular intervals in these two cases need not correspond.

A first tubular member 26, which has a flange 27 at one end, is next arranged for introduction into the assembly. Three projections 28, 29 and 30, which correspond to the slots 23, 24 and 25 respectively of the ring 22, extend from the edge of the flange 27.

Three holes 31, of which two are visible, extend through the flange 27 in correspondence with the rods 11, 12 and 13, partly beneath the level of the outer surface of the tubular member 26. An annular recess 32 is provided in the inner face of the tubular member 26.

Three longitudinal grooves 33, of which one groove is visible, are formed in the outer surface of the member 26 in correspondence with the holes 31, whereby the rods 11, 12 and 13 are able to pass through a respective hole 31 and extend along a respective groove 33 in the surface of the tubular member 26. In the tubular member 26 there is a hole 35, which, in use, may be arranged to correspond with the hole 7 in the shaft portion 4.

At its other end 36, the tubular member 26 has four flat surface portions 37 upon which a radially extending member 38 forming a latch is keyed for rotational movement with the member 26. The portions 37 are formed in a threaded portion of the member 26.

A second tubular member 40 is the next to be arranged for introduction into the assembly. The member 40 has a flange 41 at one end from which there extend three projections 42, 43 and 44 corresponding to the projections 28, 29 and 30 respectively on the first tubular member 26.

At its other end a part of the second tubular member 40 is threaded, as shown at 45, and a pair of oppositely arranged flat portions 46 and 47 are formed in the region of the threaded part 45. Three longitudinal grooves 48 are formed in the inner surface of the second tubular member 40 in such a way that, when the member 40 is passed over the member 26, each one of the grooves 33 may be lined-up with a respective groove 48.

The second tubular member 40 is then passed over the first tubular member 26 so that the member 26 extends through the member 40 and the projections 28, 29 and 30 on the member 26 are adjacent to and in line with the projections 42, 43 and 44 on the member 40 and respective ones of the pairs of the longitudinal grooves 33 and 48 face one another; the members 26 and 40 being restrained against relative longitudinal movement during assembly by means of a circlip in an annular groove 50 in the member 26.

The fingers 27 and 41 are then passed through the ring 22 against the spring 21; the pairs of projections 42, 28, 43, 29; and 44, 30 passing respectively through the slots 23, 24 and 25. During this assembly step, the pins 11, 12 and 13 each enter a respective one of the holes 31 in the flange 27 and pass along a respective one of the channels formed between the respective pairs of grooves 33 and 48. Rotation of the handle 1 and the ring 22 with respect to the assembled first and second tubular members 26 and 40 results in the projections 42—44 and 28—30 being held behind the ring 22 against the spring 21.

Relative rotational movement between the first and second tubular members 26 and 40 and the handle 1 results in the rotation of the washer 10 with the tubular members by virtue of the rods 11—13.

The next assembly step is to screw a retaining ring 51, which is threaded at 52 at one end into the handle 1, the thread 52 on the ring 51 mating with the thread 9 in the handle 1. The other end of the ring 51 is located against the ring 22 when the ring 51 is screwed in. A recess 54, formed by a wall portion 55 of the ring 51 which is thinner than the threaded portion of the ring 51, is designed in such a way that the projections 42, 43 and 44 extending from the tubular member 40 are able to rotate relative to the ring 51 within the recess 54.

In use, the assembly is secured on a door, for example, by passing the second tubular member 40 through a hole in the door until a flange 56 on the member 40 abuts one side of the door. The hole in the door has flat portions corresponding to the faces 46 and 47. A locking nut is then screwed on to the threaded portion 45 of the member 40 and is tightened against the other side of the door. The flats 46 and 47 may be used to hold the member 40 during this operation which results in the member 40 being secured to the door against relative movement.

It will be understood from the foregoing description that, in use, when the flanges 27 and 41 are located between the ring 22 and the spring 21, the key 6 projects clear of the end of the tubular member 26.

The assembly provides a fastening and control operating device.

The fastening is achieved by the use of the latch member 38 which is rotated with the first tubular member 26.

The operation of a control function is achieved by the use of the key 6 which is fixed to the handle 1 via the shaft portion 4 so that rotational or longitudinal axial movement of the handle 1 relative to the door and the second tubular member 40 is possible.

Consider now the assembly to be mounted on a door in the way described above with the member 40 extending through a hole in a door and being clamped to the door.

The operation of the assembly will be described commencing with the assembly in the position previously described, i.e. with flanges 27 and 41 located between the ring 22 and the spring 21 and the projections 42, 43 and 44 in contact with the face of the ring 22 nearest to the base 3 of the handle 1.

In this position, the first and second tubular members 26 and 40 are locked together for rotation by the pins 11, 12 and 13, each of which extends into a respective channel formed between a pair of grooves 33 and 48. It is assumed that the door is closed and latched by the latch 38.

The key 6 protrudes to a maximum extent through the door, because handle 1 is pressed towards the door against the spring 21 and held axially in position against return under the influence of the spring 21 by the impingement of the projections 42—44 on the face of the ring 22.

The key 6 and the handle 1 are free to rotate relative to the first and second tubular members 26 and 40 and rotation of the key 6 by means of the handle 1 is such that a control function is effected by the key 6. In one application of the assembly, the control function effected is the switching-off, by the rotation of the key, of an electric circuit forming a part of apparatus which is housed within a cabinet which is closed by the door.

The rotation of the handle 1 relative to the washer 10 enables a mechanism, not shown, in the handle 1 to cooperate with the scallop shaped edge 16 of the washer 10 to give a series of "click" sounds as the handle is rotated.

Upon the rotation of the handle 1 through a given number of clicks, a position is reached at which the control function is effected by the action of the key 6, whose protruding position enables it to operate a control switch mechanism, the electric circuit thereby being switched off.

The apparatus is thus rendered safe and in a condition to enable the door to be unlatched.

Further rotation of the handle 1 brings the ring 22 to a position in which the pairs of projections 42, 28; 43, 29 and 44, 30 on the tubular members 40 and 26 are in line with a respective one of the slots 23, 24 and 25 in the ring 22. In this position, the spring 21 is able to urge the handle 1 axially away from the door, the shaft 4 sliding within first tubular member 26 and withdrawing the key 6 from the control switch mechanism into the tubular member 26 and the slots 23, 24 and 25 sliding over the pairs of projections 42, 28; 43, 29 and 44, 30 until the projections 42—44 are in the recess 54 in the retaining ring 51 on the side of the ring 22 remote from the base portion 3 of the handle 1.

When this position is reached, the rods 11, 12 and 13 are disengaged from the inner longitudinal grooves 48 in the member 40 and the first and second tubular members are no longer locked together by the rods. The handle 1, together with the first tubular member 26, whose projections 28, 29 and 30 each remain in a respective one of the slots 23, 24 and 25, and the washer 10, whose rods 11, 12 and 13 each remain engaged in a respective one of the holes 31 in the member 26, are locked together and are free for rotation together with respect to the second tubular member 40. The first tubular member 26 is rotatable within the tubular member 40 and the recess 54 provides an annular space which accommodates the projections 42—44 during the rotation of the handle 1 during this phase of the operation of the assembly.

The rotation of the handle 1 during this phase of the operation of the assembly results in the tubular member 26 being rotated with respect to the tubular member 40, and the rotation of the latch 38, which is arranged on the member 26, and thus the mechanical unfastening of the door, allowing access to be obtained to apparatus which has previously been rendered safe as a result of the key 6 switching-off the electric circuit.

Further safety features may be incorporated in the assembly. It is possible, for example to house a barrel lock within the tubular shaft portion 4 of the handle 1 through the previously mentioned central hole (not visible) in the centre of the outer face of the base portion 3.

Within the tubular portion 4, there is a locking bolt (not shown) which is able to pass through one of the holes 7 in the portion 4 and the hole 35 in the tubular member 26. The locking bolt is movable by an eccentric on the barrel lock, in a known manner, into and out of the holes 7 and 35 upon the turning of a key in the barrel lock in the appropriate direction.

With the key in the barrel lock rotated to one position, the locking bolt is extended through the holes 7 and 35 locking the whole assembly together when the handle is in the "pressed-in" position with the key 6 extending through member 26 to its maximum extent.

In an intermediate position of rotation of the key in the barrel lock, the locking bolt extends through the hole 7 only into the annular recess 32 in the tubular member 26, thereby enabling the rotary movement of the handle 1 relative to the tubular members 26 and 40 to take place but preventing relative axial movement of the handle and key 6 with respect to the members 26 and 40. Thus with the key in the barrel lock in the intermediate position, it is possible to allow the control function to be effected, but not to allow the state of fastening of the door to be affected.

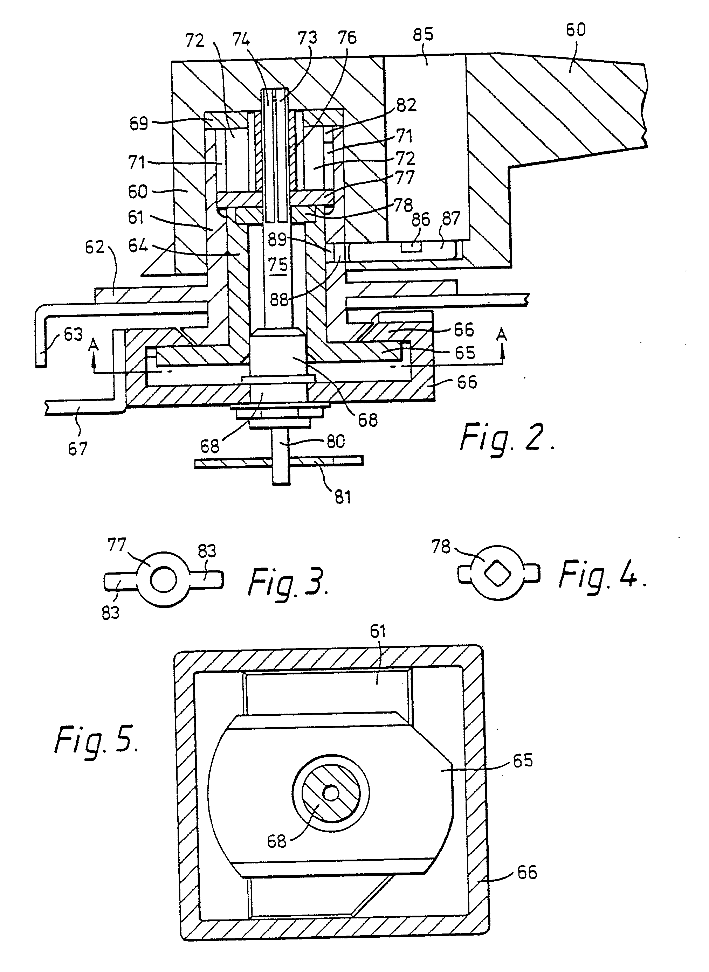

Referring to Fig. 2, there is shown a handle 60 mounted upon and axially slidable and rotatable with respect to a tubular guide 61 from which there extends a flange 62. The tubular guide 61 is mounted upon a door 63 by means of the flange 62. The tubular guide 61 houses a rotatable tubular element 64 having a radially extending portion 65 forming a latch which cooperates with a latch-securing member 66 mounted upon a part 67 of a casing which houses an apparatus (not shown). The part 67, which is fixed relative to the door 63, also provides a mounting for a lock assembly 68 via the member 66.

A base member 69, which is attached to the tubular element 64, is positioned in the handle 60 and, by virtue of the presence of the guide member 61, the member 69 restrains the element 64 against axial movement. The guide member 61 incorporates slots 71 and the tubular element 64 incorporates slots 72.

A central shaft 73, which has a rectangular cross-section over a first part 74 of its length and a circular cross-section over a second part 75 of its length is shown extending within the handle 60. The handle 60 and the shaft 73 are keyed together for rotation about the longitudinal axis of the shaft 73. The part 75 of the shaft carries a key, which in the closed position of the door 63 engages in the lock assembly 68 and which, in the Figure is in the engaged position and is not visible.

A tubular spacer member 76 spaces a locking member 77, which is arranged on the part 74 of the shaft 73, from the base member 69. The locking member 77, which is also shown in Fig. 3, is rotatable about the part 74 of the shaft 73 and passes through the slots 71 and 72 to lock the members 61 and 64 together against relative rotation.

A drive member 78, which is also shown in Fig. 4, is arranged on and rotatable with the part 74 of the shaft 73. The drive member 78 extends into the slots 72 and rotation of the member 78 results in the rotation of the tubular element 64 and the latch 65.

A shaft 80 extends from the lock assembly 68 and carries a cam 81 which may be used to operate a control function.

Fig. 5 shows the lock assembly 68 surrounded by the latch 65 which abuts the latch-securing member 66. An opening in the member 66, which has a shape corresponding to that of the latch 65, reveals the end of the tubular guide 61. The view shown in Fig. 5 reveals clearly how rotation of the latch 65 enables the latch 65 to pass through the corresponding opening in the member 66.

The extensions of the drive member 78 are freely rotatable in an annular groove in the tubular element 64 in the relative axial position shown in Fig. 2, so that the handle 60 can be rotated without rotating the latch 65, and so that the control shaft 73 and the handle 60 are fixed axially relative to the tubular member 64 during the rotation of the handle.

In use, starting from the position shown in Fig. 2, with the door 63 of the casing 67 closed and the latch 65 in the latched position, the handle 60 is rotated in a first direction about the guide 61, thereby rotating the shaft 73 which carries a key which is in engagement with the lock assembly 68 on the casing 67. The spindle 80 extending from the lock assembly 68 is thereby rotated in the first direction to switch-on a control circuit function.

In order to switch-off the control circuit function the handle 60 is rotated in the opposite direction to the piston shown in Fig. 2. In this position the extensions extend into the longitudinal grooves 72 in the element 64 and allow the handle 60, the shaft 73, the locking and drive members 77 and 78 and the spacer 76 to move axially away from the door 63. During this movement, extensions 83 from the locking member 77 remain engaged in the longitudinal grooves 71 and 72, the tubular guide 61 and the tubular element 64, thereby preventing relative rotation of the members 61 and 64. The longitudinal movement of these parts is limited by the engagement of the locking member 77 with the base member 69. At this limiting position, the projections 83 of the locking member 77 reach the level of a circumferential groove 82 in the wall of the tubular guide 61 at the end of the slot 71. This results in the disengagement of the locking member 77 from the tubular guide 61 and enables the rotation of the handle 60 to effect the rotation of the tubular element 64, by means of the engagement of the projections from the drive element 78 with the slots 72 in the tubular element 64.

During this rotation, the projections 83 of the locking member 77 enter the circumferential groove 82 and prevent relative longitudinal movement between the handle 60 and the tubular guide 61, and the projections of the drive member 78 engage the slots 72 in the tubular member 64, thereby coupling the rotational movement of the handle 60 via the drive member 78 and the tubular element 64 to the latch 65. When the latch 65 has been rotated sufficiently to enable it to be disengaged from the securing member 66, the door 63 may be opened.

It will be noted that, as with the handle 1 in Fig. 1, the handle 60 incorporates a cylindrical hole 85 for a barrel lock (not shown). An eccentric pin on the end of the barrel lock cooperates with a slot 86 in a slidable bolt 87. The rotation of a key in the barrel lock to a first position causes the bolt 87 to protrude from the handle 60 into an annular groove 88 in the outer face of the tubular guide 61 so that the handle 60 is prevented from axial movement with respect to the guide 61, while being able to rotate about the guide 61.

The rotation of the key in barrel lock to a second position results in the bolt 87 protruding further and into a hole 89 in the guide 61, thereby locking the handle 60 to the guide 61 against either axial or rotary movement relative thereto.

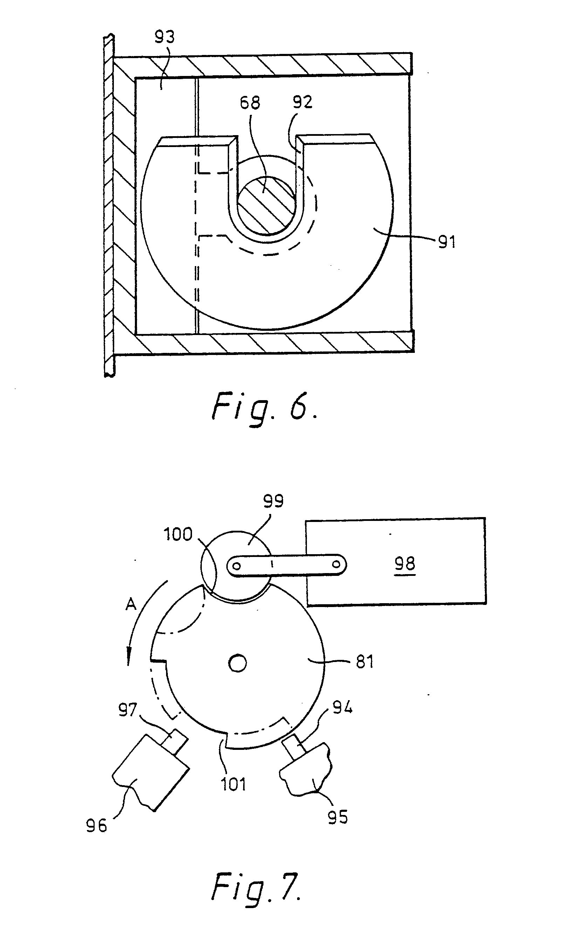

Referring to Fig. 6, there is shown a view, similar to that shown in Fig. 5, of a latch arrangement suitable for use with a sliding door.

In the arrangement shown in Fig. 6, a latch 91 is shown rotated into a locking position about a lock assembly 68. Before rotation, the latch 91 slides on to the assembly 68 as the door to which it is attached slides into the closed position. The assembly 68 enters a slot 92 in the latch 91 during the action of the sliding of the door into the closed position. The latch 91 could, of course, be used with a hinged door, in which case the latch 91 is restrained against a latch plate 93.

Referring to Fig. 7, there is shown a view of arrangements of secondary locking features suitable for restricting the operation of the control. The on position is shown by full lines, and movement to the off position (dotted lines) is in direction A.

In the arrangement shown in Fig. 7, the disc 81 operates a roller-lever operated limit switch 98 by the co-operation of the roller 99 with a detent 100 in the disc. A bolt 94 operated by a mechanism 95 may move radially inwards to cooperate with the reduced-diameter portion of the disc to prevent movement from "on" to "off". Similarly a bolt 97 operated by a mechanism 96 may cooperate with the disc to prevent movement from "off" to "inlatch".

It will be appreciated that, although the invention has been described with reference to particular embodiments, it is possible to employ variations, modifications and combinations of the arrangement described within the scope of the invention claimed.

For example, in the arrangement of Fig. 1, stops may be provided on the ring 22 to engage with the projections 41—43 on the second tubular members 40 and thereby restrict the angle of relative rotation between the members 26 and 40, or between the members 4 and 40 when member 26 is fixed against rotation.

End stops for the switch movement may alternatively be provided by engaging stops on the axially inner surface 3 of the handle with corresponding stops on the edge of the locking member 10.

The click mechanism described in relation to the shaped edge 16 of the member 10 may be used to provide positive location of the handle at each of several switch positions, and the shaped edge may have a member of detents appropriate to the number of switch positions required.

Where the switch is limited to operate between only two positions and the handle has corresponding stops, a simple over-centre spring may be used between member 10 and the inside surface of the handle.

The control function effected by the operation of the key 6 may be to control a switch in an electric circuit, or some other device, for example a hydraulic or pneumatic valve or a valve controlling other fluids. The electric switch may initiate the operation of a motor driven programmer to effect a series of operations, the programmer itself driving the switch round to the off position again.

The control operated by the key 6 may operate stepwise, or by continuous variation. It may have off positions corresponding only with the positions in which the handle can be unlatched, or it may have additional off portions.

The control device may itself be a rotary device, or it may be one to which a mechanism is fitted to convert rotary to some other motion, such mechanisms being common in conjunction with circuit breakers. Such devices are operated by the shaft 80 and the disc 81 is not required.

Further types of control device such as cam operated limit switches may be operated by the appropriate cam profile, for example as in Figure 7, wherein 98 is a roller-lever operated limit switch whose roller 99 cooperates with a cut-out 100 in the edge of the cam.

A secondary locking feature, external to the apparatus described, cooperating with the disc 81 of Fig. 2, for example, may be provided for locking the assembly against various of its operations. The feature may be part of a coin-operated mechanism, used to prevent operation to the "on" position until a coin has been accepted. It may alternatively or additionally be a bolt operated by a time delay or by a sensor for sensing hazardous circumstances, to prevent movement from an "off" position to an unlatching position until hazardous circumstances no longer exist. Such features are illustrated in Fig. 7, where the disc is in the "on" position, and the off position is shown dotted. Movement from "on" to "off" is in the direction of arrow A, and movement to the unlatching position is further in the same direction. In the off position, the rib 94 of the coin operated mechanism 95 may move radially inwards to prevent switching on. The plunger 97 of the sensing system 96 may move radially inwards to prevent movement to the unlatching position. Typically the plunger 97 is part of a solenoid bolt, a pneumatic bolt, or a bolt moved by heating of a bimetallic strip. The plunger may be disposed in other ways about the disc.

The secondary locking feature may, instead of interfering with the movement of the disc 81, interfere with the movement of the latch 38 or 65.

Referring to Figs. 1 and 2, means, for example further radial holes similar to hole 35 or 89, may be provided for locking the device in any position of its movement, by operation of the travel lock.

Further means, for example slots similar to slots 32 or 89 may be provided either circumferentially or longitudinally to enable the device to be limited in its movement between any given pair of positions.

It will be appreciated that while in the mechanism of Fig. 1, the barrel lock is mounted coaxially with the fixed member 61, it may be mounted off-centre, or outside as in Fig. 2.

Such a barrel lock may be any known device capable of operating an eccentric pin, and may for example be operated by a triangular or square key where minimal security is required.

The barrel lock may also be of the multi-indexing type, where the insertion of different keys permits different rotations of the lock. For example, referring to Fig. 2 from the position where the locking bar 87 is engaged in the groove 88, use of one key may enable rotation of the barrel lock and eccentric pin only to engage the locking bar in the hole 89. Where the control is an electrical isolator, such a key would be used to effect locking off, to enable mechanical maintenance to be done safely, but would not enable the user to obtain access to electrical control gear. A different key would be used to turn the barrel lock in the other direction to withdraw the locking bar 87 and enable access to the electrical control gear. A further key may be used to master both these keys and effect both operations.

It will be appreciated that although only three types of latching device have been described, any known latching or fastening device operable by a rotary movement can be used, including multiple latches. Such multiple latches include rod-operated locks commonly used on metal cabinets. They also include bayonet latching rings and other devices commonly used on pressure vessels. Some latches, such as that shown in Figure 6, will be suitable for use on both hinged doors and sliding doors.

The latch or latches are normally so arranged that if they are operated to the closed position while the door, etc. is open they will prevent the door being closed to a position where the control can be operated.

Although the device has been described as having a key element 6 entering a lock to operate the control, it will be appreciated that the key and lock may be replaced by any known form of coupling device. Since the latching arrangement prevents withdrawal at any other than the predetermined position or positions, the coupling need not be an interlocking type. The handle may carry either the male or the female part of the coupling, or couplings may be used where the parts are not normally regarded as male and female.

While the device has been described generally as having only one position where it may be moved from the control-operating position to the unlatching position, by suitable angular arrangements of the lugs 42—44 and 28—39 and any end stops more than one position may be obtained. While three such lugs are shown, the number is of course arbitrary. Such a device will be of value where, for example, a defeat mechanism is required for an electrical control cabinet interlock, or where, when the device is used with a machine guard, access is needed in the "inch" or "jog" position as well as in the off position. Access to such a secondary position may be restricted to particular key-holders, where a multi-indexing key system is used as referred to above.

It will be appreciated, from the above description, that the invention is suitable for use in preventing access to any type of hazardous circumstance, including moving machinery, electrical equipment, toxic gases or dusts, high or low pressure, for example. It may also be used in other circumstances where protection against a hazard is not required, but access control is desired for some other reason.

## Claims

1. A device for effecting a function of fastening together a first and a second member and a function of operating a control, the device comprising a handle (1; 60), a tubular mounting member (40; 61) for attachment to one of the first and second members, an axially movable member (5; 75) arranged for operating the control, the axially movable member being coupled to the handle (1; 60) and being accessible through the ends of the tubular mounting member (40; 61), characterised in that there is provided a second tubular member (26; 64), the second tubular member being rotatable with respect to and about the longitudinal axis of the tubular mounting member (40; 61) and having an opening at each end thereof, a fastening device (38; 65), the fastening device (38; 65) being rotatable with the second tubular member (26; 64) for fastening together the first and second members, means (22; 78) for coupling together for rotation the second tubular member and the axially movable member, the said coupling means (22; 78) being effective to couple, for rotation, the second tubular member (26; 64) and the axially movable member (5; 75) in a predetermined relative axial position thereof, and means (42—44; 71, 72, 77, 78) for enabling and guiding the axial movement of the axially movable member (5; 75) relative to the tubular mounting member (40; 61) in a predetermined relative rotational position of the axially movable member (5; 75) and the tubular mounting member (40; 61).

2. A device as claimed in claim 1 characterised in that there is provided means (11—13; 77) for locking together against relative rotation the second tubular member (26; 44) and the tubular mounting member (40; 61), the locking means (11—13; 77) being effective upon completion of the axial movement of the axially movable member (5; 75) to the control operating position.

3. A device as claimed in claim 1 or claim 2 characterised in that there is provided means (19) enabling the axially movable member (5; 75) to rotate relative to the tubular mounting member (40; 61) upon completion of the axial movement of the axially movable member (5; 75) to the control operating position.

4. A device as claimed in one of claims 1—3 characterised in that there is provided means (4; 85) for housing key operable locking mean, the key operable locking means being effective to lock the axially movable member and the second tubular member in a relative axial position.

## Patentansprüche

1. Eine Vorrichtung für die Ausführung einer Funktion, ein erstes und zweites Teil miteinander zu verbinden, und einer Funktion, eine Steuervorrichtung zu bedienen; die Vorrichtung umfaßt einen Griff (1; 60), ein rohrförmiges Befestigungsteil (40; 61) zur Befestigung an dem ersten oder zweiten Teil, ein axial bewegliches Teil (5; 75), das für die Bedienung der Steuervorrichtung angeordnet ist, mit dem Griff (1; 60) gekoppelt ist und durch die Enden des rohrförmigen Befestigungsteils (40; 61) zugänglich ist, welche dadurch gekennzeichnet ist, daß ein zweites rohrförmiges Teil (26; 64) zur Verfügung steht, welches in bezug auf und um die Längsachse des rohrförmigen Befestigungsteils (40; 61) drehbar ist und eine Öffnung an beiden Enden hat; eine Befestigungsvorrichtung (38; 65), die mit dem zweiten rohrförmigen Teil (26; 64) zur Verbindung des ersten und zweiten Teils drehbar ist; ein Mittel (22; 78) für die Kopplung zur Rotation des zweiten rohrförmigen Teils und des axial beweglichen Teils; dieses Kopplungsmittel (22; 78) ist wirksam, das zweite rohrförmige Teil (26; 64) und das axial bewegliche Teil (5; 75) in einer vorbestimmten relativen Axialposition desselben zur Rotation zu koppeln; und ein Mittel (42—44; 71, 72, 77, 78), die Axialbewegung des axial beweglichen Teils (5; 75) in Relation zu dem rohrförmigen Befestigungsteil (40; 61) in einer vorbestimmten relativen Rotationsstellung des axial beweglichen Teils (5; 75) und des rohrförmigen Befestigungsteils (40; 61) zu ermöglichen und zu lenken.

2. Eine Vorrichtung nach Anspruch 1, die dadurch gekennzeichnet ist, daß ein Mittel (11—13; 77) für die Sperrung des zweiten rohrförmigen Teils (26; 44) und des rohrförmigen Befestigungsteils (40; 61) gegen die relative Rotation zur Verfügung steht; dieses Sperrmittel (11—13; 77) ist wirksam bei Beendigung der Axialbewegung des axial beweglichen Teils (5; 75) in die Stellung zur Bedienung der Steuervorrichtung.

3. Eine Vorrichtung nach Anspruch 1 oder 2, die dadurch gekennzeichnet ist, daß ein Mittel (19) zur Verfügung steht, welches es dem axial beweglichen Teil (5; 75) ermöglicht, sich in Relation zu dem rohrförmigen Befestigungsteil (40; 61) bei Beendigung der Axialbewegung des axial beweglichen Teils (5; 75) in.die Stellung zur Bedienung der Steuervorrichtung zu drehen.

4. Eine Vorrichtung nach einem der Ansprüche 1—3, die dadurch gekennzeichnet ist, daß ein Mittel (4; 85) zur Unterbringung eines von einem Schlüssel zu bedienenden Verriegelungsmittels zur Verfügung steht; das von einem Schlüssel zu bedienende Verriegelungsmittel ist wirksam, das axial bewegliche Teil und das zweite rohrförmige Teil in einer relativen Axialposition zu verriegeln.

## Revendications

1. Dispositif pour effectuer une fonction de rattachement d'un premier et d'un second éléments et une fonction d'actionnement d'une commande, ledit dispositif comprenant un manche (1; 60), un élément de montage tubulaire (40; 61) pour rattachement à l'un des premier et second éléments, un élément mobile axialement (5; 75) prévu pour l'actionnement de la commande, l'élément mobile axialement étant relié au manche (1; 60) et étant accessible par les extrémités de l'élément (40; 61) de montage tubulaire, caractérisé en ce qu'il est prévu un deuxième élément (26; 64) tubulaire, le deuxième élément tubulaire pouvant tourner par rapport à, et autour de, l'axe longitudinal de l'élément (40; 61) de montage tubulaire, et ayant une ouverture à chaque extrémité, un élément de fixation (38; 65), l'élément (38; 65) de fixation pouvant tourner avec le deuxième élément (26; 64) tubulaire pour rattacher ensemble les premier et deuxième éléments, des moyens (22; 78) de rattachement en vue de la rotation du deuxième élément tubulaire et de l'élément mobile axialement, lesdits moyens (22, 78) de rattachement étant en mesure de rattacher, pour la rotation, le deuxième élément (26; 64) tubulaire et l'élément (5; 75) mobile axialement en une position axiale respective prédétermine desdits éléments, et des moyens (42—44; 71, 72, 77, 78) pour permettre et guider le mouvement axial de l'élément (5; 75) mobile axialement par rapport à l'élément (40; 61) de montage tubulaire en une position rotationnelle respective prédéterminée de l'élément (5; 75) mobile axialement et de l'élément de montage tubulaire (40; 61).

2. Dispositif selon la revendication 1, caractérisé en la prévision de moyens (11—13; 77) de blocage mutuel contre une rotation l'un par rapport à l'autre du deuxième élément (26; 44) tubulaire et de l'élément (40; 61) de montage tubulaire, le moyen (11—13; 77) de blocage produisant son effet lors de l'accomplissement intégral du mouvement axial de l'élément (5; 75) mobile axialement vers la position d'actionnement de commande.

3. Dispositif selon la revendication 1 ou la revendication 2, caractérisé en la prévision de moyens (19) permettant l'élément (5; 75) mobile axialement de tourner par rapport à l'élément (40; 61) de montage tubulaire après l'accomplissement intégral du mouvement axial de l'élément (5; 75) mobile axialement vers· la position d'actionnement de commande.

4. Dispositif selon l'une quelconque des revendications 1 à 3, caractérisé en la prévision de moyens (4; 85) de logement d'éléments de fermeture pouvant être actionnés par une clef, lesdits éléments de fermeture à clef produisant leur effet pour bloquer l'élément mobile axialement et le deuxième élément tubulaire en position axiale mutuelle.

Fig. 1.

Fig. 2.

Fig. 3.

Fig. 4.

Fig. 5.

**Fig. 6.**

**Fig. 7.**